# EUROPEAN PATENT SPECIFICATION

(11) **EP 1 152 672 B1**
(45) Date of publication and mention of the grant of the patent: **29.09.2004**
(21) Application number: 99939991.8
(22) Date of filing: 07.07.1999
(51) Int. Cl.: A47B 95/04, A47B 13/08, B29C 63/04

(54) **METHOD FOR MOULDING RADIUSED BOTTOM CORNERS ON WOODEN OR SIMILAR PANELS COATED WITH THERMOFORMED POLYMER SHEETS**
VERFAHREN ZUM FORMEN ABGERUNDETER UNTERKANTEN AN, MIT WARMGEFORMTEN POLYMERFOLIEN BEKLEIDETEN, HOLZ- ODER ÄHNLICHEN PLATTEN
PROCEDE DE MOULAGE DE COINS INFERIEURS ARRONDIS SUR DES PANNEAUX EN BOIS OU ANALOGUES REVETUS DE FEUILLES POLYMERES THERMOFORMEES

(30) Priority: 16.02.1999 IT VI990029
(43) Date of publication of application: 14.11.2001
(73) Proprietor: Eurocomponenti S.p.A., 31019 Portobuffolè (TV) (IT)
(72) Inventor: MONTAGNER, Silvio, I-Mansuè (IT)
(74) Representative: Bonini, Ercole
(86) International application number: PCT/EP1999/004749
(87) International publication number: WO 2000/048485

(56) References cited:
- EP-A- 0 234 192
- EP-A- 0 562 300
- DE-A- 3 444 528
- DE-A- 19 540 425
- US-A- 5 085 027

## Description

The invention concerns a method for equipping wooden panels or similar panels with radiused bottom corners coated with thermoformed polymer sheets. The invention is also applicable to the panels obtained with that method.

It is a known fact that the thermoforming technique used in the woodwork sector concerns the production of panels for use in various furnishing sectors, such as desk tops, kitchen worktops or other uses. This method consists in the application of a coating of polymer sheets, that is of plastic laminate products in sheets which may be sheets of PVC, polypropylene, polyester or similar products which cover panels of wood chipboard, MDF or similar, that is of products which are not made of solid wood. These coating sheets are applied by means of softening due to heating and subsequent adhesion by means of a membrane or vacuum press onto the panel on which a coating of glue has previously been applied.

Thermoforming alone ensures covering of the panel on three sides but not on the bottom side, due to the application technique in which a press is used. In fact, a sheet of polymer of the same type is applied beforehand on the bottom side of the panel that is to be covered, so that the subsequent application of the sheet on the three sides, as described above, closes the panel on all six surfaces forming a parallelepiped or similar figure. For this important reason, between the top covering and the bottom covering a corner is created which may be sharp or at least irritating for anyone resting his or her hands on the bottom edge of the panel. Just consider the frequent possibility of the panel being used as a top for a table or writing desk. Think how often the hands rest or rub against the bottom edge, with the possibility of irritation or even injury. US-A-5,085,027 discloses a furniture panel with a core covered by veneers. This panel has generally rounded edge with a low radius portion which is impossible to cover well with the veneers. For this reason the low radius edge is machined to create a housing for a projection plug; said plug, after insertion, is machined to provide a smooth continuous surface with the panel edge.

The aim of the invention is to create a method for equipping wooden or similar panels with radiused bottom corners which overcomes the limits of present-day technique and the problem caused by the making of the bottom corner presenting the dangerous characteristics described above.

It is also intended that the panel made with this method should be inexpensive and have a pleasant appearance.

The aims mentioned above and others which will be better indicated below are achieved through the implementation of a method for equipping wooden or similar panels with radiused bottom corners coated with thermoformed polymer sheets, the main features of which are according to claim 1.

According to a preferred embodiment of the invention, the corner-covering element may be made of various materials such as solid wood, aluminium, plastic, ABS, rubber or other materials and may be conveniently fitted either on only one side or on all four sides of the panel, in correspondence with the bottom edge.

The equipping method to which the invention refers and some examples of application of the panels will be described below as illustration, without intent of limitation, and with the aid of the drawings in which:
- fig. 1 shows in section a part of the panel made with the equipping method of the invention;
- fig. 2 shows the panel made with the equipping method of the invention during the construction of the panel;

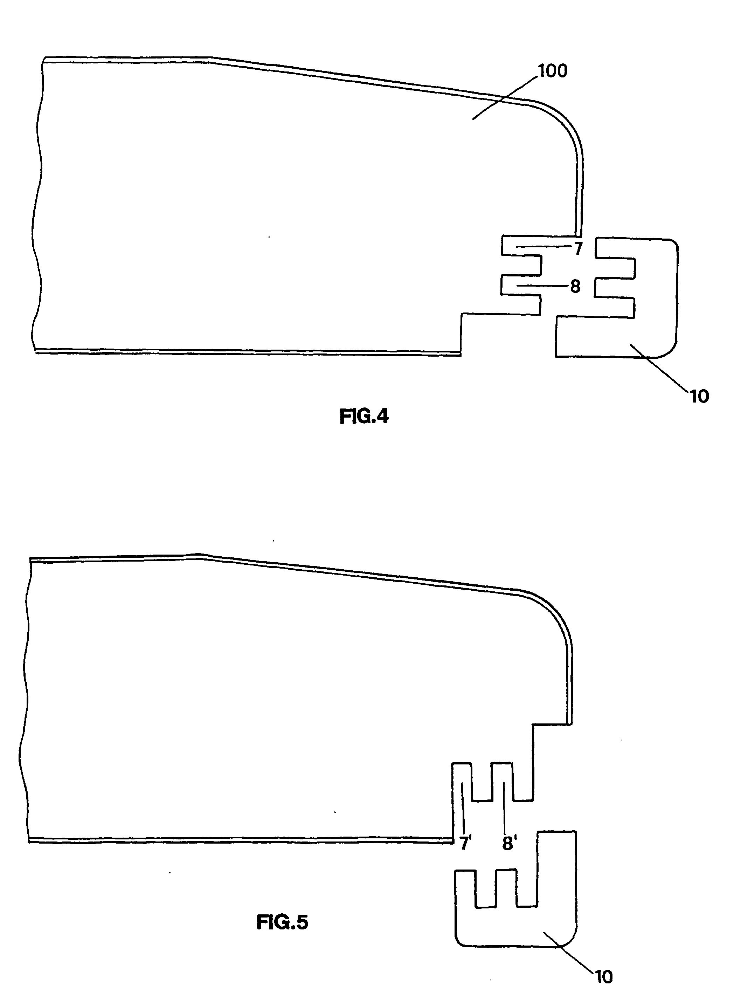

- fig. 3 shows the corner-covering element applied to the panel of fig. 1 and 2;
- fig. 4, 5, 6, 7, 8 and 9 show a partial section of panels with different corner-covering elements implementing the invention.

It is stated that hereinafter the term "wooden panel" is used to refer to a panel made of chipboard, MDF, or similar or comparable materials, used in the woodwork industry as a replacement for wood itself.

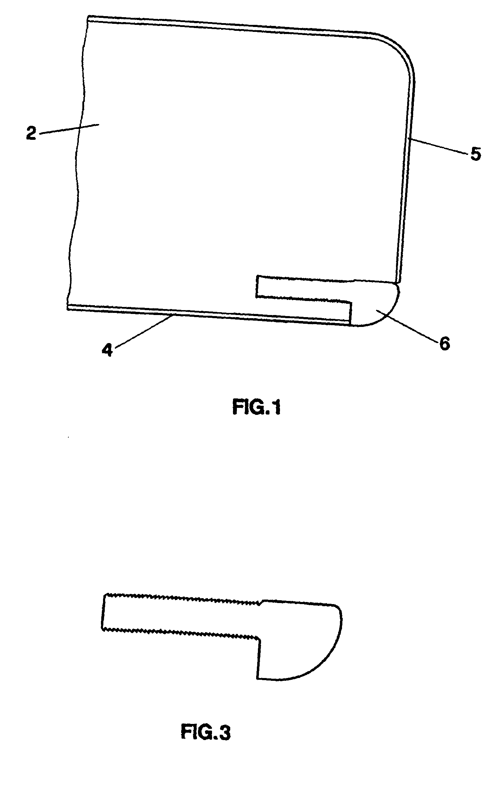

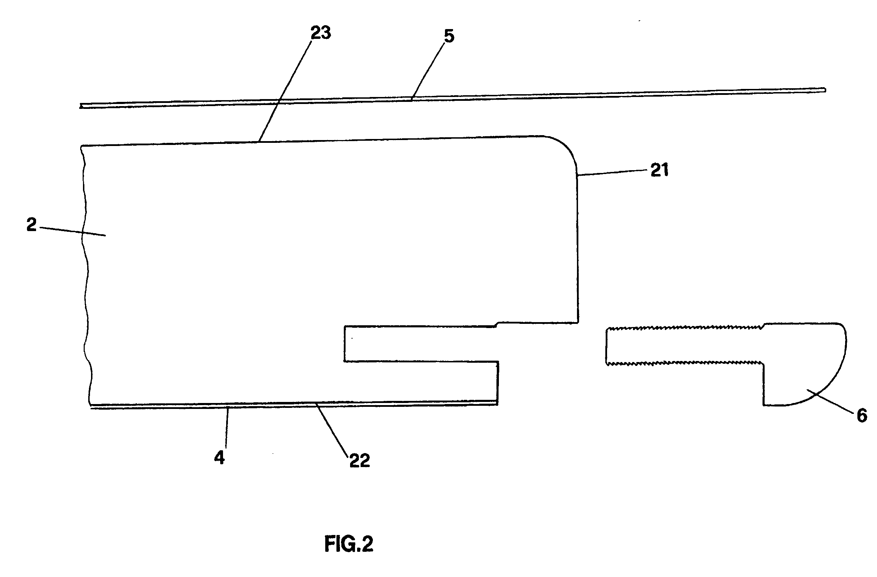

With reference to fig. 2, it can be observed that in the panel, indicated as a whole by 2, the bottom corner has been removed beforehand by milling, creating a groove, indicated by 3, which develops along the whole depth of the side 21 of the panel. The bottom surface 22 of the panel 2 has been covered beforehand with a covering element 4 which is generally composed of a polymer sheet of PVC, polypropylene or polyester. The removal of the bottom corner of the panel 2 to create the groove 3 may be done either before or after application of the bottom panel 4. The panel 2 with the milling 3 performed and with the bottom covering 4 is placed on the bed of a vacuum or membrane press and a sheet of polymer material 5 is placed close to the top surface 23 of the panel 3 to form the coating of the three still uncovered sides of the panel 2. Thermoforming, which is carried out with the aid of a membrane or vacuum press not shown in the figure, leaves the sheet 5 as shown in fig. 1. As may be seen in this figure, the bottom edge of the coating sheet 5 reaches the edge which circumscribes the area where material has been previously removed. However, there is nothing to prevent the bottom edge of the coating 5 from being inserted for a certain length into the removed area 3. Once the top sheet has been applied, as the bottom sheet is already present, the corner-covering element, indicated by 6, may be inserted in the groove 3. At the end of the operation, as shown in fig. 1, the panel 2 is therefore coated on top with the sheet 5, at the bottom with the sheet 4, while the corner-covering element 6 is on the part where coatings 5 and 4 meet; as may be seen, the corner-covering element is well radiused and avoids all the problems typical of the technique used previously.

Fig. 4 shows a corner-covering element 10 different from the one in the previous example, with horizontal milling which creates the grooves 7 and 8 which have horizontal development, parallel to the surface of the panel. The fact that there are two grooves instead of only one gives greater grip for the corner-covering element. Fig. 5 shows the same corner-covering element 10, but applied vertically, that is with the milled grooves 7' and 8' developed vertically instead of horizontally.

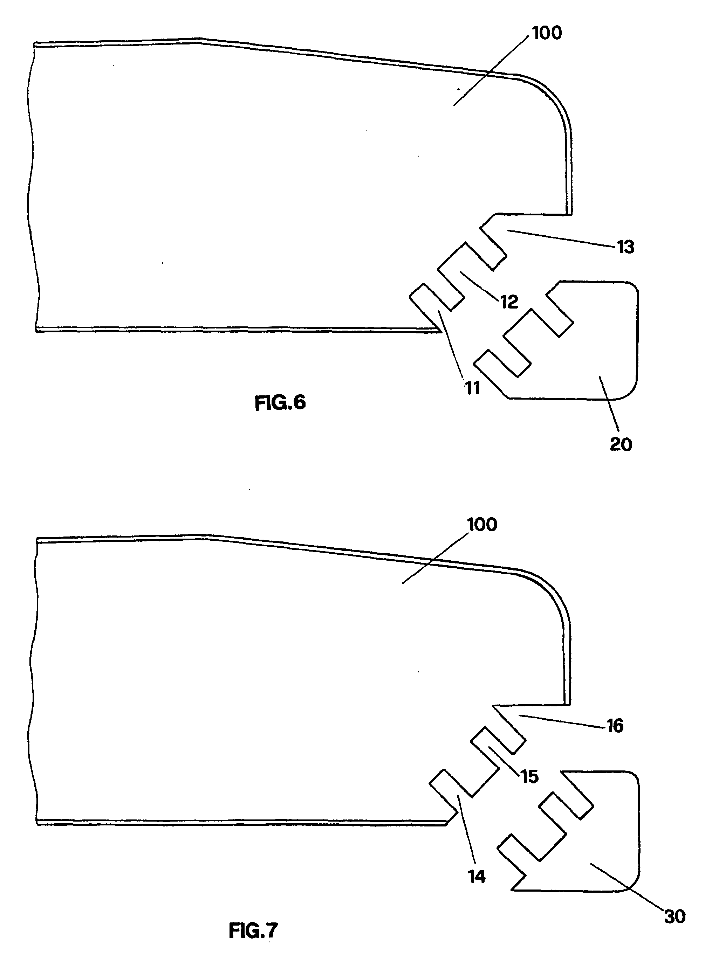

In fig. 6, in another application of the invention, the panel 100 presents grooves arranged in a line inclined with respect to the horizontal. More precisely, the grooves 11 and 12 are created in the bottom edge of the panel and the area of removal 13, so that the corner-covering element 20 matches the panel 100 following an oblique direction.

Fig. 7 shows another variation in production of a corner-covering element 30, also arranged in an oblique line with respect to the plane of the panel 100, on which panel there are cavities 14, 15 and 16 that are mated to corresponding ridges on the corner-covering element 30.

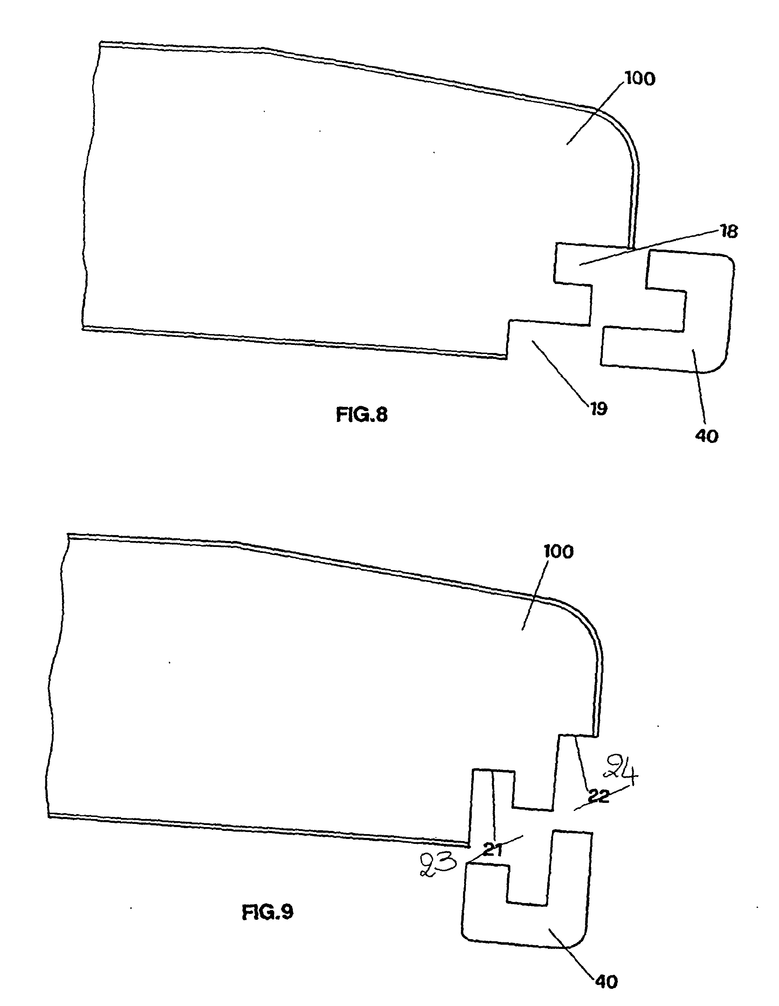

Fig. 8 shows a C-shaped corner-covering element, indicated by 40, which may be positioned on the bottom part of the panel 100 after having made two horizontal milled grooves 18 and 19. These grooves house the corresponding ridges on the panel 40.

Fig. 9 shows the same corner-covering element 40 applied vertically and not horizontally to the panel 100, on the ridges 23 and 24.

Of course a substantially infinite plurality of variations in shape of the corner-covering element is possible, and also of the ridges on the corner-covering element which fit into the corresponding groves made by milling on the bottom part of the panel. All these variations have in common the fact that each bottom part of the corner-covering element is radiused in such a way as to avoid all irritation.

In short, it can be observed that the part of the corner-covering element which fits into the milled grooves on the bottom part of the panel has a profile conjugate with these groves, so that the connection which is made with glue or equivalent systems is a connection which reconstructs the panel completely without any loss of material.

## Claims

1. Method for equipping a wooden panel (2) or panel of similar material with radiused elements (6, 10, 20, 30, 40) intended to be placed at the bottom corner portion of the panel, said panel comprising a wooden core whose top and side surfaces are covered by polymer sheets applied thereto by thermoforming, the method including the steps of:
- machining said panel prior or subsequent to the application of the panel bottom surface (22) covering polymer sheet (4) at the region of the bottom comer intended to be radiused or rounded in order to remove material and thus to create one or more grooves (3, 7, 8, 9, 9'. 11, 12, 13, 14, 15, 16, 18, 19, 23, 24) intended for receiving a comer covering element;
- applying a thermoformed coating sheet of polymer resin on the top and side surfaces of said panel in such a manner that said one or more grooves are not covered by said polymer coating sheet;
- inserting a radiused corner-covering element (6, 10, 20, 30, 40) in said one or more grooves, said element having a profile conjugate with the profile of said one or more grooves obtained during the machining step.

2. The method according to claim 1), **characterized in that** the corner-covering element (6, 10, 20, 30, 40) to be inserted presents a radiused external profile.

3. The method according to claim 2), **characterized in that** said corner-covering element is made of plastic.

4. The method according to claim 2), **characterized in that** said corner-covering element is made of aluminium.

5. The method according to claim 2), **characterized in that** said corner-covering element is made of wood.

6. The method according to claim 2), **characterized in that** said corner-covering element is made of ABS.

7. The method according to claim 2), **characterized in that** said corner-covering element is made of rubber.

## Patentansprüche

1. Methode zur Ausrüstung einer Holzplatte (2) oder einer Platte aus ähnlichem Material mit gerundeten Elementen (6, 10, 20, 30, 40) im unteren Eckbereich der Platte, wobei die Platte einen Holzkern aufweist, dessen obere und seitliche Oberflächen mit durch Thermoformung aufgebrachten Polymerblättern bedeckt sind, wobei die Methode folgende Schritte umfasst:
- Maschinelle Bearbeitung der Platte vor oder nach der Anbringung des Polymer-Abdeckblatts (4) der unteren Plattenoberfläche (22) im Bereich der unteren, abzurundenden Ecke, um Material abzutragen und daher eine oder mehrere Nuten (3, 7, 8, 9, 9', 11, 12, 13, 14, 15, 16, 18, 19, 23, 24) zur Aufnahme eines Ecken-Abdeckelements zu erzeugen;
- Aufbringen eines thermogeformten Deckblatts aus Polymerharz auf die obere und die seitlichen Oberflächen der Platte derart, dass die eine oder mehreren Nuten durch dieses Polymer-Abdeckblatt nicht abgedeckt wird/werden;
- Einsetzen eines abgerundeten Ecken-Abdeckelements (6, 10, 20, 30, 40) in diese eine oder mehreren Nuten, wobei dieses Element ein profil aufweist, dass mit dem Profil der einen oder mehreren, während der maschinellen Bearbeitung erzielten Nuten zusammenpasst.

2. Die Methode gemäß Patentanspruch 1), **dadurch gekennzeichnet, dass** das einzusetzende Ecken-Abdeckelement (6, 10, 20, 30, 40) ein abgerundetes Außenprofil aufweist.

3. Die Methode gemäß Patentanspruch 2), **dadurch gekennzeichnet, dass** das einzusetzende Ecken-Abdeckelement aus Kunststoff besteht.

4. Die Methode gemäß Patentanspruch 2), **dadurch gekennzeichnet, dass** das einzusetzende Ecken-Abdeckelement aus Aluminium besteht.

5. Die Methode gemäß Patentanspruch 2), **dadurch gekennzeichnet, dass** das einzusetzende Ecken-Abdeckelement aus Holz besteht.

6. Die Methode gemäß Patentanspruch 2), **dadurch gekennzeichnet, dass** das einzusetzende Ecken-Abdeckelement aus ABS besteht.

7. Die Methode gemäß Patentanspruch 2), **dadurch gekennzeichnet, dass** das einzusetzende Ecken-Abdeckelement aus Gummi besteht.

## Revendications

1. Méthode pour l'équipement d'un panneau en bois (2) ou d'un panneau de matériel similaire d'éléments raccordés (6, 10, 20, 30, 40) conçus pour être positionnés sur la partie angulaire inférieure du panneau, ledit panneau comprenant un noyau en bois dont les surfaces supérieures et latérales sont recouvertes par des feuilles polymériques appliquées sur celles-ci par thermoformage, la méthode comprenant les phases de:
- usinage dudit panneau avant ou successivement à l'application de la surface inférieure du panneau (22) recouvrant la feuille polymérique (4) dans la zone de l'angle inférieur conçu pour être arrondi afin d'enlever le matériel et pour créer de cette manière une ou plusieurs rainures (3, 7, 8, 9, 9', 11, 12, 13, 14, 15, 16, 18, 19, 23, 24) conçues pour recevoir un élément angulaire de couverture;
- application d'une feuille de revêtement thermoformée de résine polymérique sur les surfaces supérieures et latérales dudit panneau de façon à ce que lesdites une ou plusieurs rainures ne soient pas recouvertes par ladite feuille de revêtement polymérique;
- introduction d'un élément angulaire de couverture (6, 10, 20, 30, 40) dans lesdites une ou plusieurs rainures, ledit élément ayant un profil conjugué avec le profil desdites une ou plusieurs rainures obtenues durant la phase d'usinage.

2. La méthode selon la revendication 1), **caractérisée en ce que** l'élément angulaire de couverture (6, 10, 20, 30, 40) devant être inséré présente un profil extérieur raccordé.

3. La méthode selon la revendication 2), **caractérisée en ce que** ledit élément angulaire de couverture est réalisé en plastique.

4. La méthode selon la revendication 2), **caractérisée en ce que** ledit élément angulaire de couverture est réalisé en aluminium.

5. La méthode selon la revendication 2), **caractérisée en ce que** ledit élément angulaire de couverture est réalisé en bois.

6. La méthode selon la revendication 2), **caractérisée en ce que** ledit élément angulaire de couverture est réalisé en ABS.

7. La méthode selon la revendication 2), **caractérisée en ce que** ledit élément angulaire de couverture est réalisé en caoutchouc.
